# EUROPÄISCHE PATENTSCHRIFT

(11) **EP 0 734 162 B1**
(45) Veröffentlichungstag und Bekanntmachung des Hinweises auf die Patenterteilung: **26.06.2002**
(21) Anmeldenummer: 96104096.1
(22) Anmeldetag: 15.03.1996
(51) Int. Cl.: H04N 7/14

(54) **Kommunikationsendgerät**
Communication terminal
Terminal de communication

(30) Priorität: 24.03.1995 DE 19510737
(43) Veröffentlichungstag der Anmeldung: 25.09.1996
(73) Patentinhaber: DEUTSCHE THOMSON-BRANDT GMBH, 78048 Villingen-Schwenningen (DE)
(72) Erfinder: Platte, Hans-Joachim, 30966 Hemmingen (DE); Spruck, Manfred, 67100 Strasbourg (FR)

(56) Entgegenhaltungen:
- EP-A- 0 451 696
- GB-A- 2 250 405
- US-A- 4 975 960
- PATENT ABSTRACTS OF JAPAN vol. 015, no. 387 (E-1117), 30.September 1991 & JP 03 155290 A (MITSUBISHI ELECTRIC CORP), 3.Juli 1991,
- PATENT ABSTRACTS OF JAPAN vol. 018, no. 166 (P-1713), 18.März 1994 & JP 05 333404 A (SONY CORP), 17.Dezember 1993,
- PATENT ABSTRACTS OF JAPAN vol. 012, no. 228 (E-627), 28.Juni 1988 & JP 63 020983 A (MITSUBISHI ELECTRIC CORP), 28.Januar 1988,

## Beschreibung

Die Erfindung geht aus von einem Kommunikationsendgerät zum Senden und Empfangen von Bild und Sprache, das Bildaufnahmemittel und Bildwiedergabemittel enthält, wobei die Bildaufnahmemittel abschaltbar sind.

Kommunikationsendgeräte dieser Art sind beispielsweise als Videotelephon, Bildtelefon oder Videophon bekannt. Diese ermöglichen es einem Benutzer, sich über eine größere Entfernung elektronisch mit einem weiteren Benutzer zu unterhalten. Gleichzeitig werden dabei Bilder von den Benutzern in beiden Richtungen übertragen.

Aus dem Zeitmagazin Nr. 10, 3.3.1995, S. 24-27, ist ein Videotelephon bekannt, bei dem die Aufnahmemittel, hier eine Kamera, durch eine Klappe abschaltbar sind.

Unter Kommunikationsendgerät werden in diesem Zusammenhang auch weitere Geräte verstanden, die die Übertragung von Bild und Sprache in zwei Richtungen zur Kommunikation über ein Nachrichtensystem ermöglichen. So können z. B. Personalcomputer mit Bildaufnahmemitteln und Bildwiedergabemitteln nachgerüstet sein, so daß mit diesen die Übertragung von Bild und Sprache zwischen ihren Benutzern möglich ist.

Aus der EP-A-0 451 696 ist ein Videophon bekannt, das eine bewegliche Kamera aufweist, die ein- und ausschaltbar ist. Die Kamera sitzt hierbei auf einer Gabel des Videophons und wird beim Abnehmen von der Gabel abgeschaltet. Über einen Schalter an der Kamera kann durch einen Benutzer manuell die Kamera wieder eingeschaltet werden zum Übertragen eines gewünschten Bildes. Ist die Kamera abgeschaltet, so wird ein in einem Speichermittel gespeichertes Bild gesendet.

Für einen Benutzer des Kommunikationsendgerätes ergibt sich das Problem, daß er zu jeder Uhrzeit von einer bekannten oder unbekannten Person angerufen werden kann und diese Person den Benutzer und seine Privatsphäre eventuell zu einem unerwünschten Zeitpunkt sieht.

Die Aufgabe der Erfindung ist es daher, das Kommunikationsendgerät derart weiterzubilden, daß einem Anrufer unerwünschte Einblicke in die Privatsphäre eines Benutzers verwehrt werden, ohne daß dadurch die Übertragungskapazität und der Nutzen des Kommunikationsendgerätes eingeschränkt wird.

Diese Aufgabe wird durch die Merkmale des Anspruchs 1 gelöst. Vorteilhafte Weiterbildungen der Erfindung sind in den Unteransprüchen angegeben.

In bekannter Weise ist das Kommunikationsendgerät mit Mitteln ausgestattet, mit denen die Bildaufnahmemittel (Kamera) ausschaltbar sind, beispielsweise, wenn ein Anruf kommt und der Benutzer sich nicht automatisch live übertragen lassen will. Da der Benutzer aber an einer ständigen Bildübertragung interessiert ist, wird erfindungsgemäß ein im Kommunikationsendgerät gespeichertes Bild des Benutzers gesendet, zumindest solange, wie nicht auf normalen Kamerabetrieb geschaltet ist. Es kann ein gespeichertes Bild einmalig oder kontinuierlich oder auch eine Bilderfolge gesendet werden.

Ein vorteilhafte Weiterbildung des Kommunikationsendgerätes besteht darin, daß es einen Bildspeicher enthält, in dem Bilder von mehreren Personen, z.B. von einer Familie, einer Gruppe oder von einzelnen Mitgliedern derselben abgespeichert sind, und ein Benutzer bei einem Anruf vor Inbetriebnahme des Kommunikationsendgerätes sich ein gewünschtes Bild aussuchen kann, das gesendet werden soll.

Das Kommunikationsendgerät wird in der Weise betrieben, daß automatisch ein Bild des Bildspeichers gesendet wird, wenn die Bildaufnahmemittel ausgeschaltet sind. Während des Betriebes kann dann wunschgemäß auf die Bildaufnahmemittel umgeschaltet werden.

Das von einer Personengruppe benutzte Kommunikationsendgerät kann z.B. so eingestellt sein, daß bei einem Anruf zuerst ein Standardbild z.B. dieser Gruppe gesendet wird. Ein Benutzer aus dieser Gruppe kann dann während des Betriebes auf sein persönliches, im Bildspeicher gespeichertes Bild umschalten.

Die im Bildspeicher gespeicherten Bilder lassen sich in vorteilhafter Weise mit dem Kommunikationsendgerät erstellen. Hierzu werden die am Gerät vorhandenen Bildaufnahmemittel genutzt, wobei der Benutzer auf dem zugehörigen Monitor das Bild kontrollieren kann. Auf Wunsch wird dann das Bild per Knopfdruck im Bildspeicher abgespeichert.

Anhand der schematischen Figur wird eine vorteilhafte Ausgestaltung der Erfindung näher erläutert.

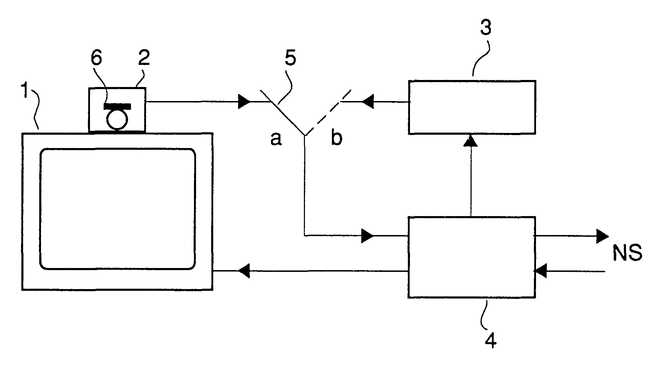

In der Figur ist schematisch ein Videotelephon dargestellt, das einen Monitor 1 zur Bildwiedergabe und eine Kamera 2 zur Bildaufnahme enthält. Das Videotelephon ermöglicht die Kommunikation über ein Nachrichtenübertragungssystem zwischen zwei entfernten Benutzern, wobei Bild und Sprache in beide Richtungen übertragen werden. Die Mittel zur Sprachübertragung entsprechen z.B. einer bekannten Telefonanlage und sind in der Figur nicht dargestellt.

Das Videotelephon enthält außerdem einen Bildspeicher 3 und einen Prozessor 4, der zwischen Bildspeicher 3 und Monitor 1 geschaltet ist, und über den die Verbindung mit dem Nachrichtenübertragungssystem NS erfolgt. Mittels des Umschalters 5 kann wahlweise ein Bild der Kamera 2 oder ein Bild des Bildspeichers 3 über das Nachrichtenübertragungssystem NS gesendet werden.

An der Kamera 2 ist eine Klappe 6 angeordnet, die beim Schließen die Kamera 2 abschaltet. Durch das Schließen der Klappe 6 wird automatisch durch den Schalter 5 auf den Bildspeicher 3 umgeschaltet, der dann anstatt des Bildes von der Kamera 2 ein Bild vom Bildspeicher 3 sendet.

Der Prozessor 4 kann für verschiedenste Zwecke genutzt werden, beispielsweise zur Steuerung des Umschalters 5, zum Auslesen des Bildspeichers 3, zur Spracherkennung oder zur Bildverarbeitung. Mit ihm können auch über die Kamera 2 Bilder von einer Person aufgenommen werden und in den Bildspeicher 3 abgespeichert werden. Der Bildspeicher 3 kann je nach Bedarf eine größere Menge an Bildern speichern. Dieser ist beispielsweise ein Halbleiterspeicher oder eine Festplatte. Die Bilder bleiben auch nach dem Auschalten oder bei Netzausfall des Videotelephons im Speicher 3 erhalten.

## Patentansprüche

1. Kommunikationsendgerät zum Senden und Empfangen von Bild und Sprache, das Bildaufnahmemittel (2), Bildwiedergabemittel (1) und eine Klappe (6) enthält, wobei die Bildaufnahmemittel (2) durch Schließen der Klappe (6) abschaltbar sind, wobei,
das Kommunikationsendgerät Speichermittel (3) enthält, in denen ein Bild gespeichert ist,
beim Schließen der Klappe (6) automatisch auf die Speichermittel (3) umgeschaltet (5) wird,
im Kommunikationsendgerät Mittel (3, 4, 5) vorhanden sind, die bei einer Abschaltung der Bildaufnahmemittel (2) bei der Benutzung des Kommunikationsendgerätes einmalig oder kontinuierlich das gespeicherte Bild senden,
und während des Betriebes wunschgemäß auf die Bildaufnahmemittel (2) umgeschaltet wird.

2. Kommunikationsendgerät nach Anspruch 1, **dadurch gekennzeichnet, daß** ein oder mehrere Bilder von einer das Kommunikationsendgerät benutzenden Person in den Speichermitteln (3) gespeichert sind.

3. Kommunikationsendgerät nach Anspruch 1 oder 2, **dadurch gekennzeichnet, daß** es Mittel (4, 5, 1) enthält, mit denen über die Aufnahmemittel (2) ein Bild aufgenommen und in den Speichermitteln (3) abgespeichert werden kann.

4. Kommunikationsendgerät nach einem der vorhergehenden Ansprüche, **dadurch gekennzeichnet, daß** es als Videotelephon, Bildtelefon oder als Computer mit Kamera und Modemanschluß anwendbar ist.

## Claims

1. Communications terminal for transmitting and receiving video and audio, which comprises video recording means (2), video reproduction means (1), and a flap (6), wherein the video recording means (2) can be switched off by closing the flap, wherein
the communications terminal comprises storage means (3) in which an image is stored,
upon closing the flap (6) an automatic switching (5) to the storage means (3) is performed,
there are means (3, 4, 5) in the communications terminal which transmit a stored image once or continuously when the video recording means (2) are switched off during use of the communications terminal,
and during operation a switching to the video recording means (2) is performed, as desired.

2. Communications terminal according to claim 1, **characterized in that** one or more images of a person using the communications terminal is or are stored in the storage means (3).

3. Communications terminal according to claim 1 or 2, **characterized in that** said terminal contains means (4, 5, 1) by means of which of an image can be picked-up via the recording means (2) and can be stored in the storage means (3).

4. Communications terminal according to one of the preceding claims, **characterized in that** said terminal can be used as a video telephone, as a videophone or as a computer with a camera and a modem connection.

## Revendications

1. Terminal de communication pour l'envoi et la réception de l'image et du son, comprenant des dispositifs de réception d'images (2), des dispositifs de reproduction d'images (1) et une bascule (6), où les dispositifs de réception d'images (2) sont déconnectables par fermeture de la bascule (6), où
le terminal de communication comprend des dispositifs de mémorisation (3) dans lesquels une image est mémorisée,
lors de la fermeture de la bascule (6), la commutation s'effectue automatiquement sur les dispositifs de mémorisation (3),
des dispositifs (3, 4, 5) sont placés dans le terminal de communication pour envoyer l'image mémorisée une fois ou en continu, lors d'une déconnexion des dispositifs de réception d'images (2), en cas d'utilisation du terminal de communication,
et où les dispositifs de réception d'images sont commutés à loisir pendant le fonctionnement.

2. Terminal de communication conforme à la revendication 1, **caractérisé en ce qu**'une ou plusieurs images sont mémorisées dans les dispositifs de mémorisation (3) par une personne utilisant le terminal de communication.

3. Terminal de communication conforme à la revendication 1 ou 2, **caractérisé en ce qu**'il comprend des dispositifs (4, 5, 1) grâce auxquels il est possible de recevoir une image via les dispositifs de réception (2) et de la mémoriser dans les dispositifs de mémorisation (3).

4. Terminal de communication conforme à l'une des revendications précédentes, **caractérisé en ce qu'**il est utilisable en tant que vidéotéléphone, visiophone ou ordinateur avec caméra et connexion par modem.
